# EUROPEAN PATENT SPECIFICATION

(11) **EP 4 108 989 B1**
(45) Date of publication and mention of the grant of the patent: **06.08.2025**
(21) Application number: 21181197.1
(22) Date of filing: 23.06.2021
(51) Int. Cl.: F23Q 2/16, F23Q 2/42, G01F 23/72

(54) **FLAME PRODUCING ASSEMBLY AND METHOD FOR USING SUCH ASSEMBLY**
FLAMMENERZEUGENDE ANORDNUNG UND VERFAHREN ZUR VERWENDUNG EINER SOLCHEN ANORDNUNG
ENSEMBLE DE PRODUCTION DE FLAMME ET PROCÉDÉ D'UTILISATION D'UN TEL ENSEMBLE

(43) Date of publication of application: 28.12.2022
(73) Proprietor: BIC Violex Single Member S.A., 14569 Anoixi (GR)
(72) Inventor: Antonakis, Ion-Ioannis, 145 69 Anoixi (GR)
(74) Representative: Peterreins Schley

(56) References cited:
- WO-A1-01/59411
- CN-U- 202 598 593
- JP-A- S58 182 028
- JP-B2- 4 291 781
- JP-U- S5 161 073
- JP-U- S54 178 551
- US-A- 4 512 190
- US-A1- 2010 276 326

## Description

### Technical Field

The embodiments described in the following disclosure relate to flame producing assemblies and methods of using a flame producing assembly.

### Background

Flame producing assemblies such as a conventional cigarette lighters comprise a fuel source of pressurized and liquidized butane. Plastic materials used to provide a safe enclosure for the liquidized butane are often opaque. This means that the user of a conventional cigarette lighter cannot observe the amount of fuel remaining inside a conventional cigarette lighter by visual inspection of the cigarette lighter. This leads to conventional cigarette lighters being disposed of before the liquid fuel supply has been fully exhausted.

JP 4 291781 B2 discusses a device for driving a pump in a combustion device.

JP S51 61073 U discusses a fuel level indicator for a cigarette lighter.

US 2010/276326 A1 discusses a paintball marker comprising a CO2 liquid level indicator.

The performance of flame producing devices such as cigarette lighters can, therefore, be further improved.

### Summary

According to a first aspect of the invention, there is provided a flame producing assembly. The flame producing assembly comprises a sealed body comprising a proximal and a distal end aligned on a longitudinal axis, wherein the sealed body comprises a void and a visible portion, a fuel supply comprising liquid fuel isolated within the sealed body, a fuel release member enabling a controllable release of the fuel supply in gaseous form from the sealed body, and a fuel indicator configured to indicate a remaining amount of liquid fuel contained in the sealed body to a user of the flame producing assembly. At least a portion of the fuel indicator is capable of changing appearance when in proximity to a magnetic field. The flame producing assembly further comprises a level tracking member comprising at least one magnet supported by a buoyant member. The at least one magnet is configured to apply a magnetic field to the fuel indicator, thereby causing the fuel indicator to indicate an amount of liquid fuel remaining in the sealed body to a user.

According to this aspect, accurate visualisation of the fuel consumed by a flame assembly, or the fuel remaining, is possible even if the flame producing assembly is opaque or visibility of the fuel inside the flame producing assembly is not possible. Furthermore, it may be difficult for users to view the amount of fuel remaining even with translucent bodies. Use of a fuel level indicator as discussed herein can improve visibility in a flame producing assembly having translucent and opaque flame producing assembly bodies. Furthermore, flame producing assemblies (such as cigarette lighters) substantially as described herein are not prematurely disposed of by users, thus reducing plastic waste over time. Furthermore, the lighters that are disposed of can be guaranteed to have exhausted their liquid fuel supply, thus improving the effect on the environment. Using an appropriate scale, the communication of an approximate number of flame generating actuations of the lighter left can be communicated to a user. As a passive measure of the remaining fuel, the user does not need to activate the fuel level indication system, and no external electronics are required, because the magnet and fuel indicator capable of changing colour in the influence of a magnetic field is always active without requiring electricity.

According to a second aspect of the invention, there is provided a method for using a flame producing assembly, comprising:
- aligning a flame producing assembly comprising a sealed body having a visible portion, the sealed body having a proximal and a distal end aligned on a longitudinal axis such that the longitudinal axis of the sealed body is substantially vertical, and such that a fuel indicator of the flame producing assembly is configured to indicate a remaining amount of liquid fuel contained in the sealed body to a user of the flame producing assembly, wherein at least a portion of the fuel indicator is capable of changing appearance of the visible portion of the sealed body
   when in proximity to a magnetic field, wherein the sealed body contains a liquid fuel supply; and
- monitoring a level tracking member of the flame producing assembly comprising at least one magnet supported by a buoyant member and configured to apply a magnetic field to the fuel indicator, thereby causing the fuel indicator to indicate an amount of liquid fuel remaining in the sealed body to a user, thus causing the fuel indicator to change appearance such that the remaining level of liquid fuel is reported to the user.

According to the present disclosure, the term "flame producing assembly" may refer to a cigarette lighter, cigar lighter, domestic gas ring lighter, butane gas cylinder (for example, as used in a camping stove or Barbeque), a gas-powered soldering iron, or a utility blowtorch for paint stripping, as examples.

According to the present disclosure, the term "proximal" refers to the end of a substantially longitudinal body such as a flame producing assembly that, in use, is closer to an element being lit by the flame producing assembly, such as a cigarette. The term "distal" refers to the end of a substantially longitudinal body such as a flame producing assembly that, in use, is further from element being lit by the flame producing assembly than the "proximal" portion.

### BRIEF DESCRIPTION OF THE DRAWINGS

Other characteristics will be apparent from the accompanying drawings, which form a part of this disclosure. The drawings are intended to further explain the present disclosure and to enable a person skilled in the art to practice it. However, the drawings are intended as nonlimiting examples. Common reference numerals on different figures indicate like or similar features.
**Figure 1** illustrates a standard cigarette lighter.
**Figure 2** illustrates a general external view comprising a partial internal cutaway view of a flame producing device with a magnetic indicator according to aspects discussed herein.
**Figure 3** schematically illustrates a longitudinal section of a conventional flame producing device for illustrative purposes.
**Figure 4** further schematically illustrates the longitudinal section of the flame producing device according to **Figure 3****.**
**Figure 5** schematically illustrates a longitudinal section of an alternative flame producing device according to aspects discussed herein.
**Figure 6a)-6d****)** schematically illustrate aspects of a magnetochromic display according to aspects discussed herein.
**Figure 7** schematically illustrates a longitudinal section of an alternative flame producing device according to aspects discussed herein.
**Figure 8** schematically illustrates a method of using a flame producing assembly according to aspects discussed herein.

### DETAILED DESCRIPTION

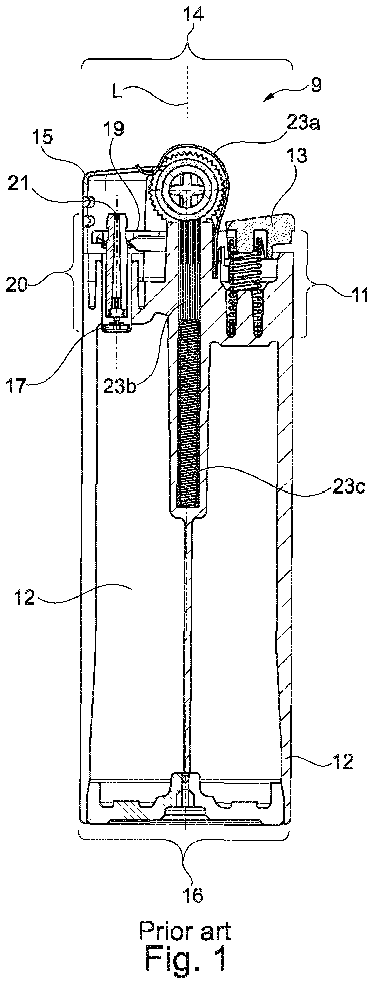

**Figure 1** illustrates a standard cigarette lighter.

Conventional cigarette lighters (flame producing assemblies) are filled with pressurised butane gas in liquid form. The basic aspects of a standard cigarette lighter 9 are illustrated in **Figure 1****.** The standard cigarette lighter 9 comprises a sealed body 12 having a proximal end 14 and a distal end 16. The standard cigarette lighter 9 is disposed between the proximal end 14 and the distal end 16 along a longitudinal axis L. At the proximal end 14 of the standard cigarette lighter 9, an ignition control portion 11 is collocated with, and operably connected to, a fuel release assembly 20. A wind guard 15 is usually provided in proximity to the fuel release assembly 20 to prevent the rapid extinguishment of the flame by strong wind incident on the lighter 9. A sparking assembly 23 comprises a striking wheel 23a held in contact against a sparking member 23b by a confined spring 23c. The sparking member 23b may, for example, be a portion of flint.

The fuel release assembly 20 may comprise, for example, a sealed body outlet 17 and a nozzle member 21. The nozzle member 21 is attached to a first end of actuation lever 19. The nozzle member 21 is arranged to move substantially in parallel to the longitudinal axis L of the lighter 9 upon movement of the end of the actuation lever 19 that holds the nozzle member 21 towards the proximal end 14. As the nozzle member 21 moves away from the sealed body outlet 17, a valve seat (for example) is exposed, enabling a pressurised gas within the void of the sealed body 12 to exit the sealed body 12 via the sealed body outlet 17 and through the nozzle member 21.

The ignition control portion 11 comprises a spring-biased ignition button 13 actuatable by a user of the lighter 9. The ignition button 13 is operably coupled to a second end of the actuation lever 19. When the ignition button 13 is pressed down by a user (along the direction of the longitudinal axis L from the proximal end 14 to the distal end 16, the second end of the actuation lever 19 is pressed downwards, and thus by the action of a fulcrum (not shown), the first end of the actuation lever 19 moves substantially along the longitudinal direction in the direction from the distal end 16 to the proximal end 14. A protruding lip of the nozzle member 21 captures a portion of the first end of the actuation lever 19 during this motion, typically causing the nozzle member to be translated substantially along the longitudinal direction in the direction from the distal end 16 to the proximal end 14 with the first end of the actuation lever 19. This uncovers the outlet 17 of the sealed body 12, enabling gaseous fuel (for example, from compressed isobutane) to escape to the portion of the nozzle member 21 enclosed by wind guard 15.

Contemporaneously with the action described in the previous paragraph, during conventional operation of the standard cigarette lighter 9, a user manipulates the striking wheel 23a such that a spark is generated in proximity to the nozzle member 21 enclosed by wind guard 15. The presence of a gaseous fuel in proximity to the nozzle member 21 implies that the spark will light the gaseous fuel to produce a flame suitable for lighting a cigarette, for example. The flame remains until the user removes the force from the ignition button 13, or until the fuel supply is exhausted.

When a user removes the force from the ignition button 13 of the ignition control portion 11, the previously described action is reversed by a resilient member (not shown), for example a biasing spring of the ignition control portion, thus causing the sealed body outlet 17 to be closed.

In view of the foregoing discussion, typically the body of a standard cigarette lighter 9 is often compact, durable, and unbreakable in order to maintain the required gas liquification pressures safely. Therefore, in high quality lighters, special grade opaque plastic materials are used that possess the required mechanical properties. The grade of plastic used for the body of the lighter being non-transparent makes it impossible for a user to see, or to estimate, the level of the liquid fuel quantity remaining inside the plastic container. Therefore, a regular lighter user is not able to verify, easily and accurately, if the lighter contains enough fuel to last for a desired period of time.

As discussed herein, a lighter user is able, by means of a special indicator, to estimate the approximate amount of fuel or number of flames left by the use of a fuel level indicator.

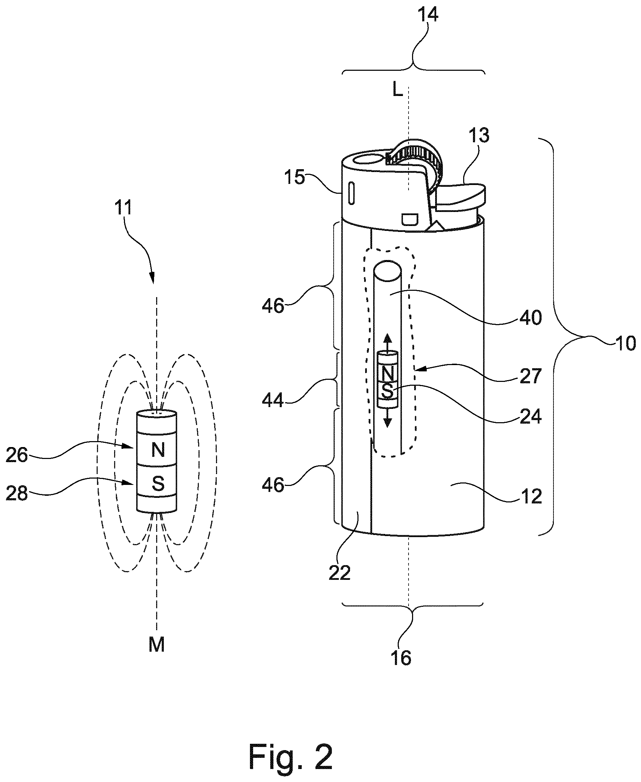

**Figure 2** illustrates a general external view comprising a partial internal cutaway view of a flame producing assembly 10 with a magnetic indicator according to aspects discussed herein. Reference numerals denoting similar elements of a flame producing assembly 10 as introduced in Figure 1 are repeated. This is for the purpose of example only. A skilled person will understand that a level tracking member comprising a magnet, and a fuel indicator capable of indicating a remaining amount of fuel when in proximity to a magnetic field, as described herein, may be applied to a wide range of flame producing articles, without limitation to the example design illustrated in the Figures.

In general, the present application concerns a flame producing assembly 10 having a sealed body 12 containing pressurised liquid fuel. The flame producing assembly 10 illustrated in **Figure 2** demonstrates the internal position of a level tracking member 24 in relation to the position of a fuel indicator using the sealed body cutaway view 27. In **Figure 2****,** the void of the sealed body 12 is approximately half filled with liquid pressurised fuel. The level tracking member 24 moves in a longitudinal direction L according to the level of the liquid pressurised fuel in the sealed body 12. The level tracking member 24 comprises a magnet and also comprises a buoyant member enabling the level tracking member 24 to be buoyant on, or close to, the surface of the remaining liquid pressurised fuel. The level tracking member 24 moves along a path defined by the shape and/or path of confinement member 40, which in this example is illustrated as a cylinder having at least one fluid connection to the sealed body 12. As shown in an inset of **Figure 2****,** an example of a buoyant level tracking member 24 is a magnet 26 having a magnetic axis M fixed to one or more buoyant members 28.

According to embodiments, the fuel indicator 22 is configured to display feedback to the user of the approximate amount of fuel remaining in the sealed body via one or more text or indicator labels on a visible surface of the flame producing assembly 10, and/or via a change in colour of the fuel indicator 22.

According to embodiments, the fuel indicator 22 indicates the current amount or level of fuel remaining relative to the proximal 14 and distal ends 16 of the sealed body 12 to a user.

A visible portion of the sealed body 12 comprises a fuel indicator 22, for example, a magnetic indication strip or magnetochromic liquid containing member. The fuel indicator 22 is capable of changing appearance when in proximity to a magnetic field. A magnetic field of the magnet 26 therefore changes the appearance of the visible portion of the sealed body 12 to provide a region of maximum appearance change 44 of the fuel indicator 22. A user may place the flame producing assembly 10 such that its longitudinal axis L is substantially parallel to a vertical direction, and in this case, the region of maximum appearance change 44 of the fuel indicator 22 may be read by a user as corresponding to a remaining amount of pressurised liquid fuel inside the sealed body 12, therefore enabling the user to estimate the remaining amount of fuel inside the sealed body 12. In examples, appearance change implies a change in colour of at least a portion of the fuel indicator. Of course, more advanced patterning of the substance of the fuel indicator 22 may be provided to enable a range of lines, textual display features, icons, motifs, and the like based on the remaining amount of pressurised liquid fuel in the sealed chamber 12.

In other words, the flame producing assembly 10 provides a passive system for estimating the approximate amount of fuel or number of flames left. In examples, at least one magnet 26 passively follows the level of pressurised liquid fuel in the flame producing assembly 10. A passive user indication system that communicates the amount of fuel, and/or number of flames remaining, to the user via at least one magnetic indication member located on the outer surface of the flame producing assembly 10 is provided.

In view of this general operational principle, a specific example of a flame producing assembly will now be discussed, although a skilled person will appreciate that many variations exist.

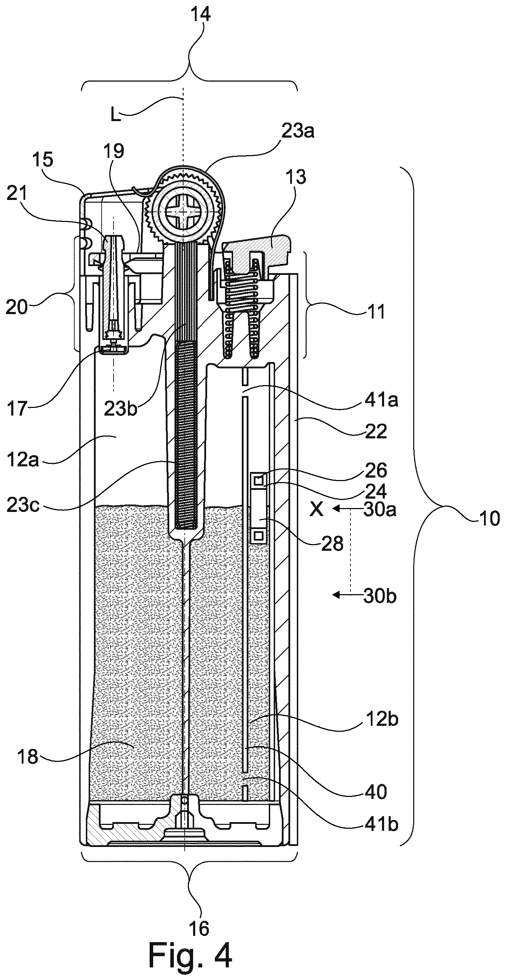

According to a first aspect of the invention, there is provided a flame producing assembly 10. The flame producing assembly comprises a sealed body 12 comprising a proximal 14 and a distal 16 end aligned on a longitudinal axis L, wherein the sealed body comprises a void. The flame producing assembly 10 comprises a fuel supply 18 (see fig. 4) comprising liquid fuel accommodated in the void within the sealed body, and a fuel release assembly 20 enabling a controllable release of the fuel supply in gaseous form from the sealed body. The flame producing assembly 10 further comprises a fuel indicator 22 configured to indicate a remaining amount of liquid fuel contained in the sealed body to a user of the flame producing assembly, wherein at least a portion of the fuel indicator is capable of changing appearance when in proximity to a magnetic field, and a level tracking member 24 comprising at least one magnet 26 supported by a buoyant member 28. The at least one magnet 26 is configured to apply a magnetic field to the fuel indicator 22, thus causing the fuel indicator 22 to indicate an amount of liquid fuel remaining in the sealed body 12 to a user. In embodiments, the level tracking member 24 comprises one magnet. In embodiments, the level tracking member 24 comprises a plurality of magnets.

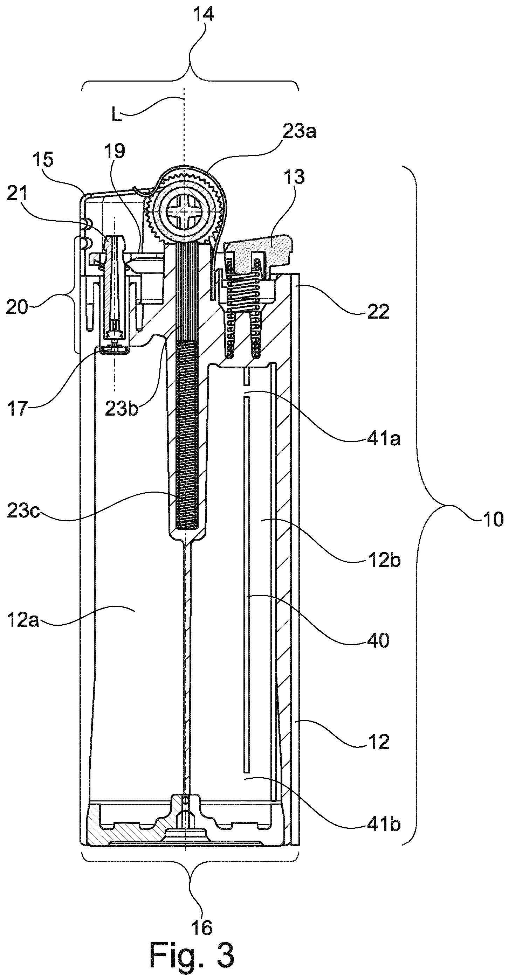

**Figure 3** schematically illustrates a longitudinal section of a flame producing assembly 10 lacking the level tracking member 24 for illustrative purposes.

The flame producing assembly 10 resembles the cigarette lighter 9, and like reference numerals as compared to those of **Figure 1** denote like or similar parts. The flame producing assembly 10 further comprises a fuel indicator 22 disposed along a portion of the outer (visible) surface of the sealed body 12. In examples, the fuel indicator 22 extends along the entirety of the surface of the sealed body 12, as illustrated in **Figure 3****.** In examples, the fuel indicator extends along a portion of the surface of the sealed body. The fuel indicator 22 is capable of changing appearance when in proximity to a magnetic field. The level tracking member 24 comprises at least one magnet 26 supported by a buoyant member 28 (not illustrated in **Figure 3****).** In embodiments, the level tracking member 24 is confined by a confinement member 40 provided in this example as a linear separator comprising first 41a and second 41b liquid flow apertures in fluid communication with the main void of the sealed body 12. Therefore, the confinement member 40 provides a track along which the level tracking member 24 may freely float whilst in proximity to the fuel indicator 22. The magnetic field created by at least one magnet 26 may thus be exposed to the fuel indicator 22 along the longitudinal direction L in a controlled manner, as the liquid fuel depletes from the sealed body 12.

**Figure 4** further schematically illustrates the longitudinal section of the flame producing device according to **Figure 3****.**

The void of the sealed body 12 is half-filled with pressurised liquid fuel in the illustration. A level tracking member 24 comprising a buoyant member 28 and a magnet 26 moves with the level of the pressurised liquid fuel in the sealed body 12 because the interior of confinement member 40 housing the level tracking member 24 is in fluid communication with the main volume of the sealed body 12 via at least liquid flow apertures 41b and 41a, such that the fuel indicator 22 changes appearance at location X. This corresponds to a point of maximum change in magnetic flux incident on the surface of the fuel indicator 22.

According to embodiments, the fuel indicator 22 comprises at least one sealed body comprising a liquid magnetochromic ink. The fuel indicator 22 may comprise a liquid magnetochromic ink. Therefore, fuel indicator 22 may be a pouch, cavity or thin body disposed proximate to the external surface of the sealed body 12 to enable changes in the liquid magnetochromic ink to be perceived by the user.

According to embodiments, the void within the sealed body 12 is divided such that the sealed body comprises a first chamber 12a and a second chamber 12b, wherein the second chamber is aligned in parallel with the longitudinal axis, wherein the second chamber is in fluidic communication with the first chamber, and wherein the level tracking member 24 is confined to the second chamber and a boundary of the second chamber is proximate to the fuel indicator 22.

For example, in **Figure 4** the confinement member 40 terminates with a first liquid flow aperture 41a towards the proximal end 14 of the flame producing assembly 10, and a second liquid flow aperture 41b towards the distal end 16 of the flame producing assembly 10. In this case, the confinement member 40 is provided as a divider inside the sealed body 12. The divider may be integrally formed with the same material as the remainder of the sealed body 12, to form a tube-like second chamber 12b (as also illustrated in Fig. 3) for the level tracking member 24 to move within.

According to embodiments, the interior of the sealed body 12 comprises at least one confinement member 40 to confine the path of the level tracking member within the sealed body, for example in a path that is aligned in parallel to the longitudinal axis of the flame producing assembly 10.

In embodiments (not illustrated), the divider inside the sealed body 12 forming the confinement member 40 does not need to form a tube inside the sealed body 12. For example, a rear inner surface of the sealed body 12 may be provided with a first elongate linear protrusion. A front inner surface of the sealed body 12 may be provided with a second elongate linear protrusion facing the first elongate linear protrusion, but not sealably abutting the first elongate linear protrusion so as to form a seal. In this case, a linear gap running along substantially the entire longitudinal length of the flame producing assembly 10 forms the fluidic connection to the first chamber 12a of the sealed body 12. The first and second elongate linear protrusions form a guide that the level tracking member 24 may move along according to the remaining amount of liquid fuel in the first chamber 12a of the sealed body 12.

In embodiments (not illustrated), the confinement member 40 may be provided as a plastic or metal guide wire. In operation, the level tracking member 24 moves in a predefined path according to the placement of the plastic or metal guide wire along with the level of remaining fuel in the sealed body 12.

In embodiments (not illustrated), the confinement member 40 may be provided by one or more blocking members or pegs positioned in the sealed body 12 between a front and rear face of the flame producing assembly 10. In operation, the level tracking member 24 moves in a predefined path bounded by the one or more detents or pegs according to the level of remaining fuel in the sealed body 12.

According to embodiments, an internal surface of the second chamber 12b comprises a low friction coating 42a, 42b configured to facilitate the movement of the level tracking member 24 in a direction substantially parallel to the longitudinal axis L. A skilled person will appreciate that a plastic forming the body of the sealed member 12 such as Delrin (TM) has a relatively low coefficient of friction. In embodiments, at least a portion of an internal surface of the second chamber 12b may be coated with a low-friction coating such as Teflon (TM) to facilitate the movement of the level tracking member 24, and/or to prevent the level tracking member 24 from becoming stuck against the side of the confinement member 40. In embodiments, the confinement member 40 is a tube having a square, rectangular, or circular cross-section.

In embodiments, the confinement member 40 is disposed so that the level tracking member 24 moves in a substantially longitudinal direction proximate to the wall of the sealed body 12. This maximises the magnetic field incident on the magnetically active fuel indicator.

According to embodiments, the at least one magnet 26 comprises a rare-earth material, alnico, or ferrite. The at least one magnet 26 is configured to produce a constant magnetic field. The at least one magnet 26 is a permanent magnet. The dimensions of the at least one magnet are designed in cooperation with the buoyant member 28 of the level tracking member 24, and may have a specific shape and type depending on the dimensions and location of the second chamber 12b and/or confinement member 40 within the flame producing assembly.

In embodiments, at least one magnet 26 comprises a magnetic axis M (north-south axis) aligned substantially in parallel to the longitudinal axis L of the flame producing assembly 10. In embodiments, at least one magnet 26 comprises a magnetic axis M (north-south axis) aligned substantially perpendicular to the longitudinal axis L of the flame producing assembly 10.

The shape of the at least one magnet 26 may be, for example, spherical, cylindrical, tubular, cubic, or conical. Where more than one magnet 26 is provided, each magnet may have a different shape.

The mass of the at least one magnet 26 may be, for example, in the range 0.5 to 10 grams. For example, neodymium (NdFeB) has a density of 7 grams per cubic centimetre. In examples, the at least one magnet is an N40 magnet. In examples, an N40 neodymium magnet has a remanence (Br) of up to 1,250 mT.

In examples, the at least one magnet 26 has a remanence (Br) of between 900 and 2,000 mT. In examples, the at least one magnet 26 has a remanence (Br) of between 1,100 and 1,500 mT.

In examples, the at least one magnet 26 may be coated with a coating, such as Ni-Cu-Ni (Nickel-Copper-Nickel), or PTFE ("Teflon", TM). In particular, a Teflon coating may improve the smoothness of the motion of the at least one magnet 26 as it moves within the second chamber 12b of the sealed body 12.

According to embodiments, the liquid fuel is selected from: methane, acetylene, propane, propylene, hydrogen, or isobutane, or combinations thereof.

According to embodiments, the flame producing assembly 10 is a lighter, more specifically a cigarette lighter or a utility lighter.

According to embodiments, the level tracking member 24 is configured to move parallel to the longitudinal axis L of the sealed body 12 when the longitudinal axis L is aligned vertically, as illustrated in **Figures** 3 and 4, for example.

According to embodiments, the effective density of the level tracking member is less than the density of the liquid fuel comprised in the sealed body. Effective density is, for example, the average density of a member comprising a number of materials of different density averaged over unit space.

According to embodiments, the buoyant member 28 is a buoyant capsule or a porous raft configured to support the at least one magnet.

According to embodiments, the buoyant member 28 is configured to translate the at least one magnet 26 from a first position 30a to a second position 30b relative to the longitudinal axis as the amount of the liquid fuel in the sealed body 12 decreases.

According to embodiments, the level tracking member 24 is configured to float freely within the sealed body 12. A major axis of the buoyant member 28 is, for example, between 95% and 50% in length compared to a greatest internal dimension of the sealed body 12 along a plane orthogonal to the longitudinal axis L of the flame producing assembly 10. In other words, the level tracking member 24 may be a float that is only constrained by the walls of the sealed body 12. According to this embodiment, a confinement member 40 is not required, because the entire sealed body 12 performs the role of the confinement member 40.

Therefore, the level tracking member 24 (magnet floating mechanism) is configured to provide the buoyancy required by the at least one magnet 26 to float on the pressurized liquid fuel. The density of liquid butane, for example, is approximately 600 kg per cubic metre. To enable the magnet to follow the level of the pressurized liquid fuel, the level tracking member 24 requires a lower effective density than the pressurized liquid fuel.

To provide this buoyancy, the level tracking member 24 may comprise, for example, a plastic hollow airtight assembly that encapsulates or is attached to the at least one magnet 26, and is configured to withstand the pressure of the pressurized liquid fuel and its chemical properties.

According to embodiments, the level tracking member 24 may comprise, for example, a porous material such as an open cell foam, or a closed cell foam, capable of increasing the effective surface area of the at least one magnet 26, enabling it to float on the liquid fuel.

According to embodiments, the level tracking member 24 may comprise an unattached item of low density material (such as a closed cell foam or a float) as the buoyant member, supporting a loose magnet 26. According to embodiments, the level tracking member 24 may comprise a hollow magnet 26 sealably enclosing a void containing a gas, where the gas provides buoyancy to the magnet 26.

According to examples, the at least one magnet 26 may be partially or fully supported by a spring or resilient member (not illustrated) to offset the weight of the magnet. In this case, the required buoyancy, and thus size, of the buoyant member 28 may be reduced.

According to embodiments, the fuel indicator 22 is disposed along a portion of the external surface of the sealed body 12. The fuel indicator 22 may be configured to appear to a user of the flame producing assembly 10 as a graphical indication which can provide an estimate to the user of the number of flames left based on the level of fuel remaining inside the sealed chamber 12. In embodiments, the fuel indicator 22 has a scale (for example, applied to the magnetically active material using a black ink, for example) indicating a plurality of segments, so that each increment indicates an approximate number of flames left. For example, if the fuel indicator 22 has a length of 50 mm, and a fuel-filled flame producing assembly 10 can provide approximately 2000 ignitions, the fuel indicator 22 may indicate a visual change 25 mm along the visible surface of the fuel indicator 22, depicting that the flame producing assembly 10 has approximately 1000 ignitions remaining.

According to embodiments, the fuel indicator 22 is distributed along at least a portion of an outer surface of the flame producing assembly, and a magnetic axis M between north pole and south pole of the at least one magnet 26 is aligned substantially orthogonally to the longitudinal axis, such that a component of magnetic flux intercepted by the fuel indicator is substantially maximised.

Such an arrangement facilitates clearer indication of the amount of remaining fuel on a magnetically active fuel indicator 22, magnetically active fuel indicator 22 is stimulated by stronger magnetic field. This may enable a smaller magnet to be used in the confinement member 40, and thereby reduces the size of buoyant member 28 required. Furthermore, such an arrangement may reduce the magnitude of magnetic fields directed from the at least one magnet 26 towards metallic components typically located at the proximal end 14 of a flame producing assembly 10, such as the wind guard 15 or the ignition control portion 11.

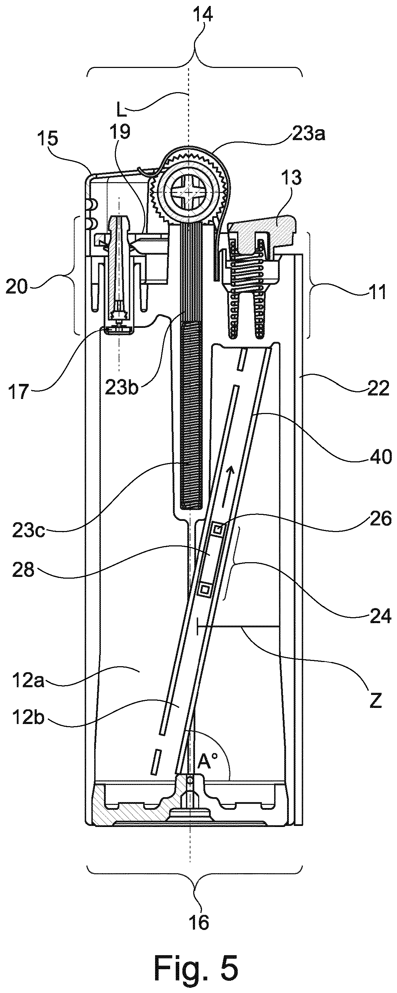

**Figure 5** schematically illustrates a longitudinal section of an alternative flame producing device according to aspects discussed herein.

According to an embodiment, the internal surface of the second chamber 12b is aligned to form an internal angle of A degrees with the longitudinal axis L of the flame producing assembly of between 2° and 40°, and is thus configured to vary a separation distance z between the level tracking member 24 and the fuel indicator 22 as the amount of fuel in the sealed body changes, to provide a corresponding variation of magnetic flux intercepted by the fuel indicator.

The arrangement of **Figure 5** is similar to those discussed above, except for the fact that the second chamber 12b (and/or its associated confinement member 40) is now arranged at an offset angle A° from the perpendicular to the longitudinal axis L of the flame producing assembly 10. For example, the offset angle may be 85°, 80°, 75°, 70°, 65°, 60°, or 55°. The second chamber 12b comprises at least one liquid flow aperture ensuring that the second chamber 12b is in fluidic communication with the first chamber 12a.

As the fuel level in the first chamber 12a declines, in use, the level tracking member 24 moves down the confinement member 40 and approaches the distal end 16 of the flame producing assembly. Because the confinement member 40 is arranged at a non-zero angle, for each reduction in the level of fuel in the sealed chamber 12, the level tracking member 24 moves laterally away from the fuel indicator 22 by a distance z. Thus, the at least one magnet 26 comprised on the level tracking member 24 may exert a progressively weaker magnetic flux on the fuel indicator 22 as the fuel level reduces. This may be used as part of an optical feedback motif to a user denoting a fading colour or icon that implies a loss of remaining fuel duration, for example.

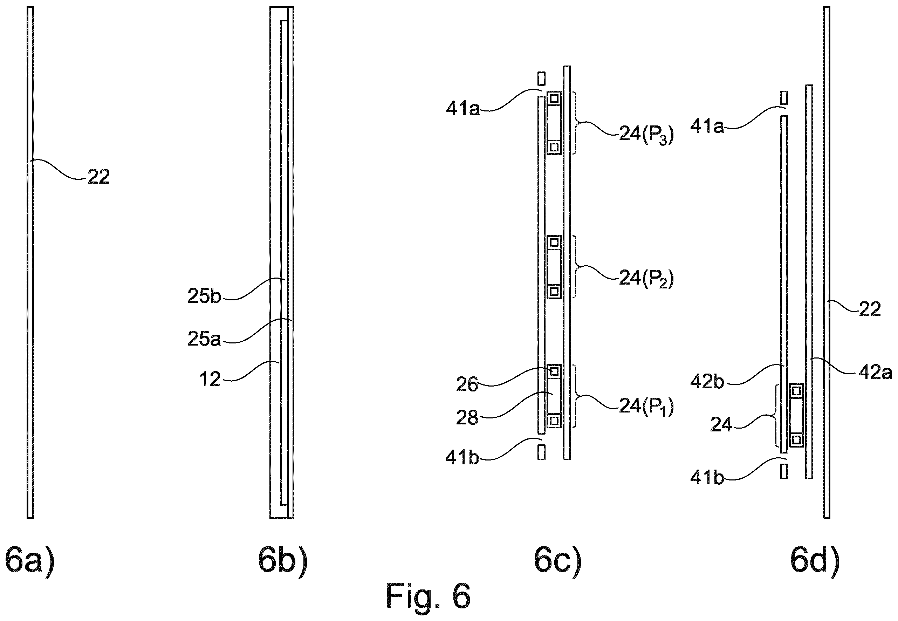

**Figure 6a)-6d****)** schematically illustrate aspects of a magnetochromic display according to aspects discussed herein.

**Figure 6a****)** illustrates a fuel indicator 22 in the form of a strip of magnetochromic material that can be applied to the external surface of a flame producing assembly. This form of fuel indicator 22 may utilize solid magnetochromic materials such as magnetochromic polymer, or magnetochromic viewing film.

**Figure 6b****)** illustrates a fuel indicator in the form of a cartridge disposed along the portion of the wall of a sealed body 12 of a flame producing assembly. A longitudinal groove or depression formed in the wall of a sealed body 12, for example, may be covered by a translucent or clear member 25a. The void formed thereby may be filled with a liquid magnetochromic material and sealed. Therefore, as a magnet moves in proximity to the liquid magnetochromic material, a user may observe a change in appearance through the translucent or clear member 25a. The width of the translucent or clear member 25a, and/or the longitudinal groove or depression, may vary in the longitudinal direction. For example, the longitudinal groove or depression may have a greater width towards the proximal end 14 of the flame producing assembly, disappearing to a point towards the distal end 16 of the flame producing assembly 10. This is another example of an optical motif that communicates to the user that the fuel comprised in the sealed body is becoming scarce. In an example, the translucent or clear member 25a may comprise an optical filter. The optical filter may vary in colour along the longitudinal dimension of the flame producing assembly. In an example, a portion of the translucent or clear member 25a may be polarised.

**Figure 6c****)** illustrates the level tracking member 24 at three positions in the second chamber 12b (confinement member 40) P1, P2, and P3 according to an amount of fuel remaining.

**Figure 6d****)** illustrates the level tracking member 24 in combination with the fuel indicator 22 in the form of a strip of magnetochromic material. A maximum change in colour of the fuel indicator 22 can be observed by a user at point X.

A magnetochromic material changes its colour under the influence of a magnetic field. This change in colour usually occurs at least in the visible region of the electromagnetic spectrum. One example of a magnetochromic material is a cartridge housing the commercially available NanoBRICK (TM) MTX ink in a liquid state. NanoBRICK (TM) MTX ink uses magnetically changeable photonic crystals capable of reflecting different wavelengths of light depending on the intensity of the magnetic field that they are subjected to. When these crystals are suspended in a liquid solution, they can make the ink cartridge capable of changing colour in the presence of a magnetic field.

A magnetic viewing film may, for example, house small metal filings suspended in a coloured liquid (such as a green liquid). In the presence of a magnetic field, the filings align themselves, thus changing the hue of the film. Furthermore, magnetic viewing film comprising magnetochromic polymer microspheres provides a chromatic reaction to the presence of a proximate magnetic field.

According to embodiments, the fuel indicator 22 (for example, a magnetic indication system) comprises a magneto chromatic material, magneto chromatic polymer microspheres, or a magnetically active coating comprising ferro-active particles.

In embodiments, the fuel indicator 22 is responsible for reporting a change in the intensity of the magnetic field that is close to it, via a change in colour in the visible spectrum of the fuel indicator 22. In embodiments, the fuel indicator 22 comprises a strip disposed along a portion of the outer body of the flame producing assembly 10. In embodiments, the strip is disposed along the entire outer body of the flame producing assembly. In embodiments, the fuel indicator 22 is disposed on an outer portion of the sealed body 12 that is proximally in alignment with the predefined path of the level tracking member defined by confinement member 40. In embodiments, the entire outer body of the sealed body 12 comprises a fuel indicator 22. In embodiments, the fuel indicator 22 is a longitudinal strip having width of 2mm, 3mm, 4mm, 5mm or more.

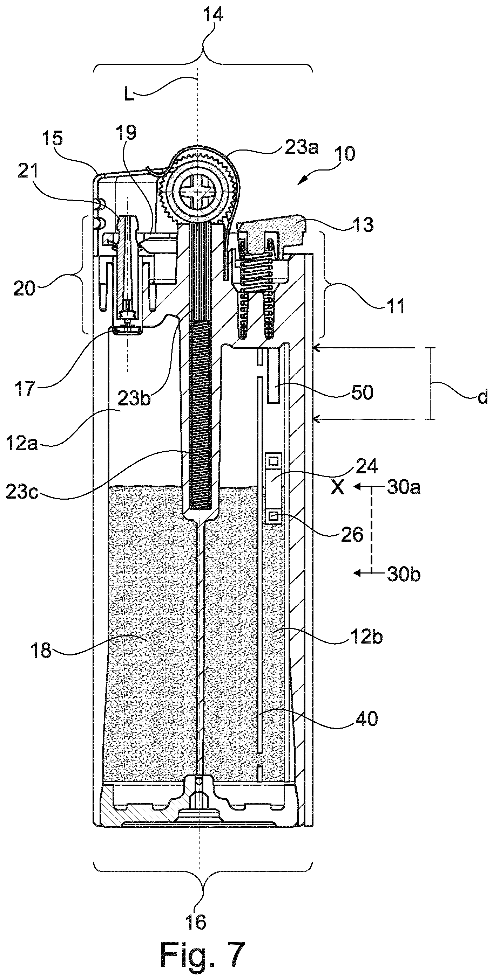

**Figure 7** schematically illustrates a longitudinal section of an alternative flame producing device according to aspects discussed herein.

According to embodiments, one or more of the level tracking member 24 and/or the proximal 14 or distal 16 end of the sealed body 12 are spaced apart d, for example using a spacing member 50, along a substantially longitudinal axis L of the sealed body. The spacing member is configured to prevent the at least one magnet 26 of the level tracking member 24 becoming permanently affixed at the proximal and/or distal ends of the flame producing assembly by magnetic attraction to a metal member located at either the proximal and/or distal ends of the flame producing assembly 10, respectively.

According to embodiments, the spacing member 50 comprises at least one resilient member, for example a spring or foam block, attached to either the proximal 14 or distal 16 end of the sealed body 12 and configured to support the level tracking member 24.

In a typical flame producing assembly 10 such as a cigarette lighter as shown in Fig. 1, the proximal end 14 of the flame producing assembly 10 may comprise ferromagnetic materials in the wind guard 15, the ignition control portion 11, and/or the fuel release assembly 20, for example.

The dimensions of the spacing member 50 according to an example of the lighter according to the first aspect may be designed to ensure that the magnet 26 of the level tracking member 24 does not become permanently stuck to the proximal end 14 of the flame producing assembly 10 if it becomes upended between uses, for example whilst being kept in a user's pocket. The dimensions of the spacing member 50 are calculated to ensure that for the type of magnet 26 used as part of the level tracking member 24, the attractive force between the magnet 26 and the proximal end of the flame producing assembly 10 are not great enough to cause the level tracking member 24 to become permanently stuck to the proximal end 14 of the flame producing assembly 10 either when supported in liquid fuel, or not.

In embodiments, the spacing member 50 may alternatively, or in addition, be included on a proximally, or distally, oriented portion of the level tracking member 24. This also functions to separate the at least one magnet 26 from the proximal end, for example.

Provision of a spacing member 50 is not essential, because in some configurations, the at least one magnet 26 may have a small enough strength, and/or the amount of ferrous metal in the proximal and/or distal ends of the flame producing assembly may be reduced to the extent that the level tracking member 26 cannot become stuck at either the proximal or distal ends.

According to embodiments, the sealed body 12 comprises a constant circular cross section in a plane orthogonal to the longitudinal axis L. The confinement member 40 is a single or double spiral guide disposed on the internal surface of the sealed body 12. As the amount of fuel in the sealed body 12 changes, the level tracking member 24 is rotationally displaced in the plane orthogonal to the longitudinal axis L as the level tracking member 24 moves in the direction of the longitudinal axis 12, thus enabling the fuel indicator 22 to change according to an angular component around the sealed body 12.

According to embodiments, the inner wall of the second chamber 12b and the level tracking member 24 both have complementary non-circular cross sections in a plane orthogonal to the longitudinal axis L, thus preventing rotational movement of the level tracking member 24 in a plane orthogonal to the longitudinal axis L.

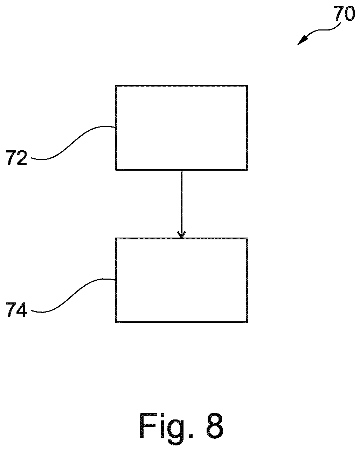

**Figure 8** schematically illustrates a method 70 of using a flame producing assembly according to aspects discussed herein.

According to a second aspect of the invention, there is provided a method 70 for using a flame producing assembly, comprising:
- aligning 72 a flame producing assembly comprising a sealed body having a visible portion, the sealed body having a proximal and a distal end aligned on a longitudinal axis such that the longitudinal axis of the sealed body is substantially vertical, and such that a fuel indicator of the flame producing assembly is configured to indicate a remaining amount of liquid fuel contained in the sealed body to a user of the flame producing assembly, wherein at least a portion of the fuel indicator is capable of changing appearance of the visible portion of the sealed body when in proximity to a magnetic field, wherein the sealed body contains a liquid fuel supply; and
- monitoring 74 a level tracking member of the flame producing assembly comprising at least one magnet supported by a buoyant member and configured to apply a magnetic field to the fuel indicator, thereby causing the fuel indicator to indicate an amount of liquid fuel remaining in the sealed body to a user, thus causing the fuel indicator to change appearance such that the remaining level of liquid fuel is reported to the user.

For example, in use, a user sets the flame producing assembly 10 on a substantially flat surface, or aligns it such that its centre perpendicular (longitudinal) axis L is in substantially the same direction as vertical. The level tracking member 24 moves and comes to rest at the same level as the remaining fuel supply 18. The magnitude of the magnetic field strength close to the magnet 26 is greatest, thus causing a change of colour of a magnetically active indicator pigment or fluid adjacent to the magnet in, or on, the fuel indicator.

The user is able to read the change of colour corresponding to the amount of liquid fuel remaining. For example, the fuel indicator may change to a darker green colour, or the magnetochromic material changes colour. For example, NanoBRICK (TM) ink may change from a brown to a blue hue. In examples, a legend or scale adjacent to the fuel indicator may provide numerical feedback concerning the amount of remaining fuel.

In the preceding specification, numerous specific details are set forth in order to provide a thorough understanding. It will be apparent, however, to one having ordinary skill in the art that the specific detail need not be employed to practice the present disclosure. In other instances, well-known materials or methods have not been described in detail in order to avoid obscuring the present disclosure.

Reference throughout the preceding specification to "one embodiment", "an embodiment", "one example" or "an example", "one aspect" or "an aspect" means that a particular feature, structure, or characteristic described in connection with the embodiment or example is included in at least one embodiment of the present disclosure. Thus, appearances of the phrases "in one embodiment", "in an embodiment", "one example" or "an example", "one aspect" or "an aspect" in various places throughout this specification are not necessarily all referring to the same embodiment or example. The scope of the invention is defined in the appended claims.

### REFERENCE NUMERALS

- L: Longitudinal axis
- X: example location of change of appearance on fuel indicator 22
- M: Magnetic Axis
- Z: variable lateral distance to fuel indicator

- 9: Standard cigarette lighter
- 10: Flame producing assembly
- 11: Ignition control portion
- 12: Sealed Body
- 12a: First chamber
- 12b: Second chamber
- 13: Ignition button
- 14: ...(proximal end)
- 15: Wind guard
- 16: ... (distal end)
- 17: Sealed body outlet
- 18: Fuel Supply
- 19: Actuation lever
- 20: Fuel Release Assembly
- 21: Nozzle member
- 22: Fuel Indicator
- 23a: Striking wheel
- 23b: Sparking member
- 23c: Sparking member spring
- 24: Level tracking member (at positions P1, P2, P3)
- 25a: Translucent or clear member
- 25b: Magnetochromic liquid cartridge
- 26: Magnet
- 27: Sealed body cutaway view
- 28: Buoyant Member
- 30a,b: first and second positions of level tracking member
- 40: Confinement Member
- 41a,b: Liquid flow aperture
- 42a,b: low friction tube wall
- 44: Region of maximum colour change of fuel indicator
- 46: Region of reduced colour change of fuel indicator
- 50: Spacing member
- 70: Method
- 72: aligning...
- 74: monitoring...

## Claims

1. A flame producing assembly (10), comprising:
- a sealed body (12) comprising a proximal (14) and a distal (16) end aligned on a longitudinal axis (L), wherein the sealed body comprises a void and a visible portion;
- a fuel supply (18) comprising liquid fuel accommodated in the void within the sealed body;
- a fuel release assembly (20) enabling a controllable release of the fuel supply (18) in gaseous form from the sealed body (12);
- a fuel indicator (22) configured to indicate a remaining amount of liquid fuel contained in the sealed body (12) to a user of the flame producing assembly (10), **characterized in that** at least a portion of the fuel indicator (22) is capable of changing appearance of the visible portion of the sealed body (12) when in proximity to a magnetic field; wherein a level tracking member (24) comprises at least one magnet (26) supported by a buoyant member (28) and
wherein the at least one magnet (26) is configured to apply a magnetic field to the fuel indicator (22), thereby causing the fuel indicator (22) to indicate an amount of liquid fuel remaining in the sealed body (12) to a user.

2. The flame producing assembly (10) according to claim 1,
wherein the buoyant member (28) is configured to translate the at least one magnet (26) from a first position (30a) to a second position (30b) relative to the longitudinal axis as the amount of the liquid fuel in the sealed body (12) decreases.

3. The flame producing assembly (10) according to one of claims 1 or 2,
wherein the fuel indicator (22) is distributed along at least a portion of an outer surface of the sealed body (12) or flame producing assembly (10); and/or
wherein a magnetic axis between north pole and south pole of the at least one magnet (26) is aligned substantially orthogonally to the longitudinal axis (L), such that a component of magnetic flux intercepted by the fuel indicator is substantially maximised.

4. The flame producing assembly (10) according to one of the preceding claims,
wherein the buoyant member (28) is a buoyant capsule, or a porous raft configured to support the at least one magnet (26).

5. The flame producing assembly (10) according to one of claims 1 to 4,
wherein the fuel indicator (22) comprises a magneto chromatic material, magneto chromatic polymer microspheres, or a magnetically active coating comprising ferro-active particles.

6. The flame producing assembly (10) according to one of the preceding claims,
wherein the interior of the sealed body (12) comprises at least one confinement member (40) to confine the path of the level tracking member (24) within the sealed body (12).

7. The flame producing assembly (10) according to one of claims 1 to 6,
wherein the void within the sealed body (12) is divided such that the sealed body (12) comprises a first chamber (12a) and a second chamber (12b), wherein the second chamber is aligned in parallel with the longitudinal axis (L), wherein the second chamber (12b) is in fluidic communication with the first chamber (12a), and wherein the level tracking member (24) is confined to the second chamber (12b) and a boundary of the second chamber (12b) is proximate to the fuel indicator (22).

8. The flame producing assembly (10) according to claim 7,
wherein an internal surface of the second chamber (12b) comprises a low friction coating configured to facilitate the movement of the level tracking member (24) in a direction substantially parallel to the longitudinal axis (L).

9. The flame producing assembly (10) according to one of claims 7 or 8,
wherein the internal surface of the second chamber (12b) is aligned to form an internal angle (A°) with the longitudinal axis (L) of the flame producing assembly of between 2 and 40 degrees, and is thereby configured to vary a separation distance (z) between the level tracking member (24) and the fuel indicator (22) as the amount of fuel in the sealed body changes, to provide a corresponding variation of magnetic flux intercepted by the fuel indicator (22).

10. The flame producing assembly (10) according to one of the preceding claims,
wherein one or more of the level tracking member (24) and/or the proximal (14) or distal (16) end of the sealed body (12) are spaced apart, for example using a spacing member (50), along a substantially longitudinal axis of the sealed body, wherein a space (d) is configured to prevent the at least one magnet (26) of the level tracking member (24) becoming permanently affixed at the proximal and/or distal ends of the flame producing assembly (10) by magnetic attraction to a metal member located at either the proximal and/or distal end (14, 16) of the flame producing assembly (1), respectively.

11. The flame producing assembly (10) according to one of the preceding claims,
wherein the fuel indicator (22) is configured to display feedback to the user of the approximate amount of fuel remaining in the sealed body (12) via one or more text or indicator labels on the visible portion of the sealed body (12) of the flame producing assembly (10), and/or via a change in colour of the fuel indicator (22).

12. The flame producing assembly (10) according to one of the preceding claims,
wherein the fuel indicator (22) indicates the current amount or level of fuel remaining relative to the proximal (14) and distal ends (16) of the sealed body (12) to a user.

13. The flame producing assembly (10) according to one of the preceding claims,
wherein the fuel indicator (22) comprises a further sealed body or channel (25a) comprising a liquid magnetochromic ink (25b).

14. The flame producing assembly (10) according to one of the preceding claims,
wherein the liquid fuel is methane, acetylene, propane, propylene, hydrogen, or isobutane, or combinations thereof.

15. A method (70) for using a flame producing assembly, comprising:
- aligning (72) a flame producing assembly comprising a sealed body having a visible portion, the sealed body having a proximal and a distal end aligned on a longitudinal axis such that the longitudinal axis of the sealed body is substantially vertical, and such that a fuel indicator of the flame producing assembly is configured to indicate a remaining amount of liquid fuel contained in the sealed body to a user of the flame producing assembly, **characterized in that** at least a portion of the fuel indicator is capable of changing appearance of the visible portion of the sealed body when in proximity to a magnetic field, wherein the sealed body contains a liquid fuel supply; and
- monitoring (74) a level tracking member of the flame producing assembly comprising at least one magnet supported by a buoyant member and configured to apply a magnetic field to the fuel indicator, thereby causing the fuel indicator to indicate an amount of liquid fuel remaining in the sealed body to a user, thus causing the fuel indicator to change appearance such that the remaining level of liquid fuel is reported to the user.

## Patentansprüche

1. Ein Flammenerzeugungsanordnung (10), umfassend:
- einen abgedichteten Körper (12), umfassend ein proximales (14) und ein distales (16) Ende, die auf einer Längsachse (L) ausgerichtet sind, wobei der abgedichtete Körper einen Hohlraum und einen sichtbaren Abschnitt umfasst;
- eine Brennstoffversorgung (18), umfassend flüssigen Brennstoff, der in dem Hohlraum innerhalb des abgedichteten Körpers untergebracht ist;
- eine Brennstofffreigabeanordnung (20), die eine steuerbare Freigabe der Brennstoffzufuhr (18) in gasförmiger Form aus dem abgedichteten Körper (12) ermöglicht;
- eine Brennstoffanzeige (22), die konfiguriert ist, um einem Benutzer der Flammenerzeugungsanordnung (10) die verbleibende Menge von flüssigem Brennstoff anzuzeigen, der in dem abgedichteten Körper (12) enthalten ist,
**dadurch gekennzeichnet, dass** mindestens ein Abschnitt der Brennstoffanzeige (22) in der Lage ist, ein Erscheinungsbild des sichtbaren Abschnitts des abgedichteten Körpers (12) zu ändern, wenn er sich in der Nähe eines Magnetfelds befindet; wobei
ein Füllstandsverfolgungselement (24) mindestens einen Magneten (26) umfasst, der durch ein schwimmfähiges Element (28) getragen wird, und
wobei der mindestens eine Magnet (26) konfiguriert ist, um ein Magnetfeld auf die Brennstoffanzeige (22) anzuwenden, wodurch bewirkt wird, dass die Brennstoffanzeige (22) einem Benutzer eine Menge von flüssigem Brennstoff anzeigt, die in dem abgedichteten Körper (12) verbleibt.

2. Die Flammenerzeugungsanordnung (10) nach Anspruch 1,
wobei das schwimmfähige Element (28) konfiguriert ist, um den mindestens einen Magneten (26) von einer ersten Position (30a) in eine zweite Position (30b) relativ zu der Längsachse zu verschieben, während die Menge des flüssigen Brennstoffs im abgedichteten Körper (12) abnimmt.

3. Die Flammenerzeugungsanordnung (10) nach einem der Ansprüche 1 oder 2,
wobei die Brennstoffanzeige (22) entlang mindestens eines Abschnitts einer Außenoberfläche des abgedichteten Körpers (12) oder der Flammenerzeugungsanordnung (10) verteilt ist; und/oder
wobei eine magnetische Achse zwischen Nordpol und Südpol des mindestens einen Magneten (26) im Wesentlichen orthogonal zu der Längsachse (L) derart ausgerichtet ist, dass eine Komponente von magnetischem Fluss, aufgefangen durch die Brennstoffanzeige, im Wesentlichen maximiert wird.

4. Die Flammenerzeugungsanordnung (10) nach einem der vorstehenden Ansprüche,
wobei das schwimmfähige Element (28) eine schwimmfähige Kapsel oder ein poröses Floß ist, das konfiguriert ist, um den mindestens einen Magneten (26) zu tragen.

5. Die Flammenerzeugungsanordnung (10) nach einem der Ansprüche 1 bis 4,
wobei die Brennstoffanzeige (22) ein magnetochromatisches Material, magnetochromatische Polymermikrokügelchen oder eine magnetisch aktive Beschichtung, umfassend ferroaktive Partikel, umfasst.

6. Die Flammenerzeugungsanordnung (10) nach einem der vorstehenden Ansprüche,
wobei das Innere des abgedichteten Körpers (12) mindestens ein Beschränkungselement (40) umfasst, um den Weg des Füllstandsverfolgungselements (24) innerhalb des abgedichteten Körpers (12) zu beschränken.

7. Die Flammenerzeugungsanordnung (10) nach einem der Ansprüche 1 bis 6,
wobei der Hohlraum innerhalb des abgedichteten Körpers (12) derart unterteilt ist, dass der abgedichtete Körper (12) eine erste Kammer (12a) und eine zweite Kammer (12b) umfasst, wobei die zweite Kammer parallel zu der Längsachse (L) ausgerichtet ist, wobei die zweite Kammer (12b) in Fluidverbindung mit der ersten Kammer (12a) steht und wobei das Füllstandsverfolgungselement (24) auf die zweite Kammer (12b) beschränkt ist und eine Grenze der zweiten Kammer (12b) in der Nähe der Brennstoffanzeige (22) liegt.

8. Die Flammenerzeugungsanordnung (10) nach Anspruch 7,
wobei eine Innenoberfläche der zweiten Kammer (12b) eine reibungsarme Beschichtung umfasst, die konfiguriert ist, um die Bewegung des Füllstandsverfolgungselements (24) in einer Richtung im Wesentlichen parallel zu der Längsachse (L) zu erleichtern.

9. Die Flammenerzeugungsanordnung (10) nach einem der Ansprüche 7 oder 8,
wobei die Innenoberfläche der zweiten Kammer (12b) ausgerichtet ist, um einen Innenwinkel (A°) mit der Längsachse (L) der Flammenerzeugungsanordnung zwischen 2 und 40 Grad auszubilden, und dadurch konfiguriert ist, um einen Trennungsabstand (z) zwischen dem Füllstandsverfolgungselement (24) und der Brennstoffanzeige (22) zu variieren, während sich die Brennstoffmenge in dem abgedichteten Körper ändert, um eine entsprechende Variation des magnetischen Flusses, aufgefangen durch die Brennstoffanzeige (22), bereitzustellen.

10. Die Flammenerzeugungsanordnung (10) nach einem der vorstehenden Ansprüche,
wobei ein oder mehrere der Füllstandsverfolgungselemente (24) und/oder das proximale (14) oder distale (16) Ende des abgedichteten Körpers (12) beispielsweise unter Verwendung eines Abstandselements (50) entlang einer im Wesentlichen längsverlaufenden Achse des abgedichteten Körpers beabstandet sind, wobei ein Raum (d) konfiguriert ist, um zu verhindern, dass der mindestens eine Magnet (26) des Füllstandsverfolgungselements (24) durch magnetische Anziehung zu einem Metallelement, das sich jeweils entweder an dem proximalen und/oder distalen Ende (14, 16) der Flammenerzeugungsanordnung (10) befindet, dauerhaft an dem proximalen und/oder distalen Ende der Flammenerzeugungsanordnung (10) befestigt wird.

11. Die Flammenerzeugungsanordnung (10) nach einem der vorstehenden Ansprüche,
wobei die Brennstoffanzeige (22) konfiguriert ist, um dem Benutzer über einen oder mehrere Text- oder Anzeigemarkierungen auf dem sichtbaren Abschnitt des versiegelten Körpers (12) der Flammenerzeugungsanordnung (10) und/oder über eine Farbänderung der Brennstoffanzeige (22) eine Rückmeldung über die ungefähre Menge des verbleibenden Brennstoffs in dem abgedichteten Körper (12) anzugeben.

12. Die Flammenerzeugungsanordnung (10) nach einem der vorstehenden Ansprüche,
wobei die Brennstoffanzeige (22) einem Benutzer die aktuelle Menge oder den aktuellen Füllstand des verbleibenden Brennstoffs relativ zu dem proximalen (14) und distalen Ende (16) des abgedichteten Körpers (12) anzeigt.

13. Die Flammenerzeugungsanordnung (10) nach einem der vorstehenden Ansprüche,
wobei die Brennstoffanzeige (22) einen weiteren abgedichteten Körper oder Kanal (25a), umfassend eine flüssige magnetochrome Tinte (25b), umfasst.

14. Die Flammenerzeugungsanordnung (10) nach einem der vorstehenden Ansprüche,
wobei der flüssige Brennstoff Methan, Acetylen, Propan, Propylen, Wasserstoff oder Isobutan oder Kombinationen davon ist.

15. Ein Verfahren (70) zur Verwendung einer Flammenerzeugungsanordnung, umfassend:
- Ausrichten (72) einer Flammenerzeugungsanordnung, umfassend einen abgedichteten Körper der einen sichtbaren Abschnitt aufweist, wobei der abgedichtete Körper ein proximales und ein distales Ende aufweist, die auf einer Längsachse derart ausgerichtet sind, dass die Längsachse des abgedichteten Körpers im Wesentlichen vertikal ist, und derart, dass eine Brennstoffanzeige der Flammenerzeugungsanordnung konfiguriert ist, um einem Benutzer der Flammenerzeugungsanordnung die verbleibende Menge von flüssigem Brennstoff anzuzeigen, der in dem abgedichteten Körper enthalten ist, **dadurch gekennzeichnet, dass** mindestens ein Abschnitt der Brennstoffanzeige in der Lage ist, das Erscheinungsbild des sichtbaren Abschnitts des abgedichteten Körpers zu ändern, wenn er sich in der Nähe eines Magnetfelds befindet, wobei der abgedichtete Körper eine flüssige Brennstoffversorgung enthält; und
- Überwachen (74) eines Füllstandsverfolgungselements der Flammenerzeugungsanordnung, umfassend mindestens einen Magneten, der durch ein schwimmfähiges Element getragen wird und konfiguriert ist, um ein Magnetfeld auf die Brennstoffanzeige anzuwenden, wodurch bewirkt wird, dass die Brennstoffanzeige einem Benutzer eine Menge von flüssigem Brennstoff anzeigt, die in dem abgedichteten Körper verbleibt, wodurch bewirkt wird, dass die Brennstoffanzeige ihr Erscheinungsbild derart ändert, dass dem Benutzer der verbleibende Füllstand des flüssigen Brennstoffs mitgeteilt wird.

## Revendications

1. Un Ensemble de production de flammes (10), comprenant :
- un corps scellé (12) comprenant des extrémités proximale (14) et distale (16) alignées sur un axe longitudinal (L), dans lequel le corps scellé comprend un vide et une partie visible ;
- une réserve de combustible (18) comprenant du combustible liquide logé dans le vide à l'intérieur du corps scellé ;
- un ensemble de libération du combustible (20) permettant une libération contrôlable de la réserve de combustible (18) sous forme gazeuse à partir du corps scellé (12) ;
- un indicateur de combustible (22) conçu pour indiquer une quantité restante de combustible liquide contenu dans le corps scellé (12) à un utilisateur de l'ensemble de production de flammes (10), **caractérisé en ce qu'**au moins une partie de l'indicateur de combustible (22) est capable de changer l'apparence de la partie visible du corps scellé (12) lorsqu'il se trouve à proximité d'un champ magnétique ; dans lequel
un élément de suivi de niveau (24) comprend au moins un aimant (26) soutenu par un élément flottant (28) et
dans lequel l'au moins un aimant (26) est conçu pour appliquer un champ magnétique à l'indicateur de combustible (22), amenant ainsi l'indicateur de combustible (22) à indiquer une quantité de combustible liquide restant dans le corps scellé (12) à un utilisateur.

2. L'ensemble de production de flammes (10) selon la revendication 1,
dans lequel l'élément flottant (28) est conçu pour déplacer en translation l'au moins un aimant (26) d'une première position (30a) vers une seconde position (30b) par rapport à l'axe longitudinal lorsque la quantité du combustible liquide dans le corps scellé (12) diminue.

3. L'ensemble de production de flammes (10) selon l'une quelconque des revendications 1 ou 2,
dans lequel l'indicateur de combustible (22) est réparti sur au moins une partie d'une surface extérieure du corps scellé (12) ou de l'ensemble de production de flammes (10) ; et/ou
dans lequel un axe magnétique entre un pôle nord et un pôle sud de l'au moins un aimant (26) est aligné sensiblement orthogonalement à l'axe longitudinal (L), de sorte qu'une composante d'un flux magnétique intercepté par l'indicateur de combustible est sensiblement maximisée.

4. L'ensemble de production de flammes (10) selon l'une quelconque des revendications précédentes,
dans lequel l'élément flottant (28) est une capsule flottante ou un radeau poreux conçu pour soutenir l'au moins un aimant (26).

5. L'ensemble de production de flammes (10) selon l'une quelconque des revendications 1 à 4,
dans lequel l'indicateur de combustible (22) comprend un matériau magnétochromatique, des microsphères de polymère magnétochromatiques, ou un revêtement magnétiquement actif comprenant des particules ferroactives.

6. L'ensemble de production de flammes (10) selon l'une quelconque des revendications précédentes,
dans lequel l'intérieur du corps scellé (12) comprend au moins un élément de limitation (40) destiné à limiter la trajectoire de l'élément de suivi de niveau (24) à l'intérieur du corps scellé (12).

7. L'ensemble de production de flammes (10) selon l'une quelconque des revendications 1 à 6,
dans lequel le vide à l'intérieur du corps scellé (12) est divisé de sorte que le corps scellé (12) comprend une première chambre (12a) et une seconde chambre (12b), dans lequel la seconde chambre est alignée parallèlement à l'axe longitudinal (L), dans lequel la seconde chambre (12b) est en communication fluidique avec la première chambre (12a), et dans lequel l'élément de suivi de niveau (24) est limité à la seconde chambre (12b) et une limite de la seconde chambre (12b) est proche de l'indicateur de combustible (22).

8. L'ensemble de production de flammes (10) selon la revendication 7,
dans lequel une surface interne de la seconde chambre (12b) comprend un revêtement à faible friction conçu pour faciliter le mouvement de l'élément de suivi de niveau (24) dans une direction sensiblement parallèle à l'axe longitudinal (L).

9. L'ensemble de production de flammes (10) selon l'une quelconque des revendications 7 ou 8,
dans lequel la surface interne de la seconde chambre (12b) est alignée de sorte à former un angle interne (A°) avec l'axe longitudinal (L) de l'ensemble de production de flammes compris entre 2 et 40 degrés, et est ainsi conçue pour faire varier une distance de séparation (z) entre l'élément de suivi de niveau (24) et l'indicateur de combustible (22) lorsque la quantité de combustible dans le corps scellé change, afin de fournir une variation correspondante du flux magnétique intercepté par l'indicateur de combustible (22).

10. L'ensemble de production de flammes (10) selon l'une quelconque des revendications précédentes,
dans lequel un ou plusieurs éléments parmi l'élément de suivi de niveau (24) et/ou l'extrémité proximale (14) ou distale (16) du corps scellé (12) sont espacés, par exemple à l'aide d'un élément d'espacement (50), le long d'un axe sensiblement longitudinal du corps scellé, dans lequel un espace (d) est conçu pour empêcher l'au moins un aimant (26) de l'élément de suivi de niveau (24) d'être fixé de façon permanente aux extrémités proximale et/ou distale de l'ensemble de production de flammes (10) par attraction magnétique à un élément métallique situé à soit l'extrémité proximale et/ou distale (14, 16) de l'ensemble de production de flammes (1), respectivement.

11. L'ensemble de production de flammes (10) selon l'une quelconque des revendications précédentes,
dans lequel l'indicateur de combustible (22) est conçu pour afficher un retour d'information à l'intention de l'utilisateur de la quantité approximative de combustible restant dans le corps scellé (12) par l'intermédiaire d'une ou de plusieurs étiquettes de texte ou d'indicateur sur la partie visible du corps scellé (12) de l'ensemble de production de flammes (10), et/ou par l'intermédiaire d'un changement de couleur de l'indicateur de combustible (22).

12. L'ensemble de production de flammes (10) selon l'une quelconque des revendications précédentes,
dans lequel l'indicateur de combustible (22) indique la quantité actuelle ou le niveau actuel de combustible restant par rapport aux extrémités proximale (14) et distale (16) du corps scellé (12) à l'utilisateur.

13. L'ensemble de production de flammes (10) selon l'une quelconque des revendications précédentes,
dans lequel l'indicateur de combustible (22) comprend un autre corps scellé ou canal (25a) comprenant une encre liquide magnétochromique (25b).

14. L'ensemble de production de flammes (10) selon l'une quelconque des revendications précédentes,
dans lequel le combustible liquide est du méthane, de l'acétylène, du propane, du propylène, de l'hydrogène ou de l'isobutane, ou des combinaisons de ceux-ci.

15. Un Procédé (70) pour l'utilisation d'un ensemble de production de flammes, comprenant :
- l'alignement (72) d'un ensemble de production de flammes comprenant un corps scellé ayant une partie visible, le corps scellé ayant une extrémité proximale et une extrémité distale alignées sur un axe longitudinal de sorte que l'axe longitudinal du corps scellé est sensiblement vertical, et de sorte qu'un indicateur de combustible de l'ensemble de production de flammes est conçu pour indiquer une quantité restante de combustible liquide contenu dans le corps scellé à un utilisateur de l'ensemble de production de flammes, **caractérisé en ce qu'**au moins une partie de l'indicateur de combustible est capable de changer l'apparence de la partie visible du corps scellé lorsqu'il se trouve à proximité d'un champ magnétique, dans lequel le corps scellé contient une réserve de combustible liquide ; et
- la surveillance (74) d'un élément de suivi de niveau de l'ensemble de production de flammes comprenant au moins un aimant soutenu par un élément flottant et conçu pour appliquer un champ magnétique à l'indicateur de combustible, amenant ainsi l'indicateur de combustible à indiquer une quantité de combustible liquide restant dans le corps scellé à un utilisateur, amenant ainsi l'indicateur de combustible à changer l'apparence de sorte que le niveau restant de combustible liquide est signalé à l'utilisateur.
